# EUROPÄISCHE PATENTANMELDUNG

(11) **EP 0 625 339 A1**
(43) Veröffentlichungstag der Anmeldung: **23.11.1994**
(21) Anmeldenummer: 94103396.1
(22) Anmeldetag: 07.03.1994
(51) Int. Cl.: A61C 3/14

(54) **Zahn- und Wurtzelheber mit Abstützungsvorrichtung**

(30) Priorität: 08.03.1993 DE 4307248
(71) Anmelder: Tomic, Dobrivoje, Dr., D-81549 München (DE)
(72) Erfinder: Tomic, Dobrivoje, Dr., D-81549 München (DE)

(57) **Zusammenfassung**

Der Zahn- und Wurzelheber als Extraktionsinstrument bestehend aus einer Hebelspitze (Kralle) (4) und einer Abstützungsvorrichtung (5) zum Entfernen von retinierten, verlagerten Zähne oder allein stehende Wurzel im Lückengebiß. Der angebrachte Abstützteil kann im Kieferwinkel, am Kieferkamm oder am Harten Gaumen abgestützt werden und bewirkt den notwendigen Schub-Hebe-Effekt ohne die Verletzung und traumatisierung der umliegenden Gewebe.

## Beschreibung

Die Erfindung betrifft die Schaffung eines Zahn- und Wurzelhebers als Extraktionsinstrument zum Entfernen von Zähnen und Zahnwurzeln, welcher neben einer Hebelspitze auch eine Abstützungsvorrichtung aufweist und in der Zahnmedizin Anwendung findet.

In der Zahnmedizin und insbesondere in der oralen Chirurgie sind verschiedene Zahn- und Wurzelheber längst vorhanden, aber mit vielen Nachteilen behaftet und oft in der Anwendung eingeschrenkt. Ihr Arbeitsteil besteht nur aus einr einziger Form, wie etwa als Kralle, Spitze oder Spatel, aber ohne eine eigene, zum Hebeleffekt notwendige Abstützungsvorrichtung. Als besonders mangelhaft und sogar unbrauchbar erweisen sich die bischer bekannten Heber bei der Extraktion von alleinstehenden Zähnen oder Wurzel und bei retinierten oder impaktierten Zähnen, wennsie in der Umgebung keine Abstützung finden. Wenn sie aber mit ihrem schmalen Arbeitsteil an der Nachbarzahn oder am Alveolarknochen abgestützt werden, dann kommt es oft zu einer Beschädigung und sogar zur Fraktur. Das Fehlen einer Abstützungsvorrichtung an den jetzigen Hebern stellt ein ernsthaftes Hindernis für eine erfolgreiche Anwendung bie Zahn-Wurzelextrktion dar.

Der Erfindung liegt die Aufgabe zugrunde, Zahn- Wurzelheber mit einem Arbeitsteil, bestehend aus Hebelteil-/Spitze und einer eigener Abstützungsvorrichtung anzugeben, die Extraktionstechnik und Vorgang zu vereinfachen, mögliche Schäden zu vermeiden und den Eingriffsablauf zu verkürzen und zu verbessern.

Gegenstand der Erfindung ist der Zahn- Wurzelheber mit einem Arbeitsteil, bestehend aus Hebelteil-/Spitze und Abstützungsvorrichtung, und die Schaffung eines Extraktionsinstrumentes in zweckentsprehender Form als Zahn- Wurzelheber mit Abstützungsvorrichtung.

Das erfindungsgemässe Extraktionsinstrument weist einen Zahn- und Wurzelheber, bestehend aus einem Arbeitsteil, Schaft und Griff, auf. Der erfindungsgemässe Arbeitsteil besteht aus einer Heberspitze/Hebelteil und aus Abstützungsvorrichtung, welche vom Schaft aus in etwa entgegengestzter Richtung voneinander verlaufen. Die Abstützungsvorrichtung/Abstützungsteil kann verschiedene Formen und Grössen aufweisen, bevorzugt aber blattförmige, herzförmige, kreisförmige, eckigovale, runde, halbrunde und andere Formen, und kann dabei gebogen, starr,nachgiebig oder elastisch sein, beschichtet oder zusätzlich überzogen mit druckreduzierndem Material. Durch das Anbringen von Zusatzteilen lassen sich Form und Grösse verändern. Die Heberspitze/Heberteil hat die Form etwa einer Kralle, eines Hakens, Stecher, Spatel oder ähnliches und kann gerade oder gebogen sein. Das erfindungsgemässe Arbeitsteil oder nur die Abstützungsvorrichtung kann auch abnehmbar, drehebar, verstellbar und/oder ein auswechselbares Teil des erfindungsgemässen Zahn- und Wurzelhebers sien. Das erfindungsgemässe Instrument kann auch eine Saugvorrichtung aufweisen.

Der erfindungsgemässe Instrument mit seinem eingebautem Abstützteil ist in vieler Hinsicht ein wesentlicher technischer Fortschrit gegenüber den bekannten Wurzelhebern. Der erfindungsgemässe Abstützteil des neuen Hebers bewirkt den notwendigen und entscheidenden Schub-Hebe-Effekt ohne Verletzung und traumatisierung der umliegenden Gewebe. Besonderes vorteilhaft ist seine Benützung beim Entfernen von retinierten, verlagerten oder allein stehenden Wurzeln oder Zähnen im Lückengebiß wo die Anwendung der bekannten Heber nicht geeignet ist. Der erfindungsgemäss eingebaute atraumatische Abstützteil des neuen Hebers kann im Kieferwinkel, am Kieferkamm oder am Harten Gaumen zur Abstützung des erfindungsgemässen Hebers während seiner Anwendung angelegt/abgestützt werden, was mit keinem der bekannten Heber möglich ist. Die häufigen Verlätzungen, Beschädigungen und Knochenverluste bei Benützung der hörkömmlichen Heber können mit dem neuen Zahn- Wurzelheber gänzlich vermieden werden. Der Behandlungsablauf wird erheblich verkürzt, vereinfacht und schonend ausgeführt.

Die folgende Zeichnung soll als Beispiel dienen die Erfindung und die Ansprüche näher zu erläuten.

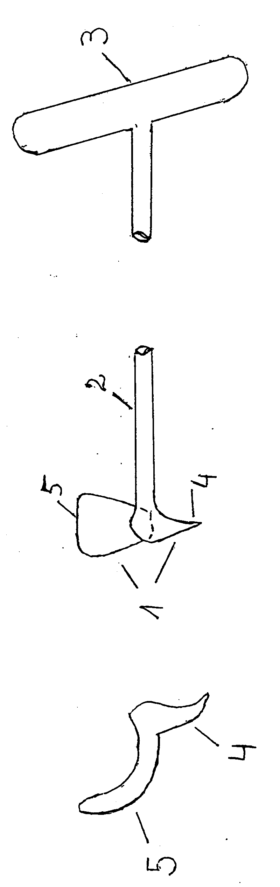

## Patentansprüche

1. Zahn- und Wurzelheber bestehend aus einem Arbeitsteil (1), Schaft (2) und Handgriff (3), wobei der Arbeitsteil aus Hebelspitze (4) und Abstützungsvorrichtung (5) besteht, dadurch gekennzeichnet, daß
a) Die Abstützungsvorrichtung verschiedene Formen und Grössen aufweist und in starrer Form, elastisch, nachgiebig oder mit druckreduzierendem Material überzogen sein kann.
b) die Hebelspitze verschiedene Formen wie Kralle, Hacken, Spatel oder Stecher und verschiedene Größen aufweisen kann.
c) das Arbeitsteil oder nur die Abstützungsvorrichtung kann abnehmbar und auswechselbar sein.

2. Zahn- und Wurzelheber nach Anspruch 1, dadurch gekennzeichnet, daß Schaft und Handgriff zweckentsprechend verschiedene Formen und Größen sein können, sowie einen Saugkanal aufweisen können.
